# EUROPEAN PATENT APPLICATION

(11) **EP 1 790 952 A1**
(43) Date of publication of application: **30.05.2007**
(21) Application number: 05445089.5
(22) Date of filing: 23.11.2005
(51) Int. Cl.: G01D 5/25

(54) **Direction indicating device**

(71) Applicant: Saab AB, 581 88 Linköping (SE)
(72) Inventor: Alexandersson, Henrik, 16247 Vällingby (SE)
(74) Representative: Hyltner, Jan-Olof

(57) **Abstract**

The present invention relates to a device for indicating the direction for rapid orientation of equipments, such as sights, periscopes and weapon barrels on a combat vehicle. The device comprises a flexible strip (1) connected to decoding electronics (3) and provided with a position dependent switch arrangement along the flexible strip. The decoding electronics communicate with the switch arrangement to identify the status of the switch arrangement. The invention provides for a non-complex and flexible device easy to adapt to the space where it is to be mounted. According to the invention the switch arrangement along the strip comprises a plurality of flexible membrane switches (2) connected to the decoding electronics (3) through a plurality of conductors provided along the strip for individual decoding of the binary status of each of the membrane switches.

## Description

The present invention relates to a device for indicating the direction for rapid orientation of equipments, such as sights, periscopes and weapon barrels, comprising a flexible strip connected to decoding electronics and provided with a position dependent switch arrangement along the flexible strip, the decoding electronics communicating with the switch arrangement to identify the status of the switch arrangement.

There is often a requirement to control the sights mounted on vehicles, for example ground based combat vehicles or ships, from another seat than the seat of the sight operator.

A possible scenario is as follows:
1. The driver of the vehicle has observed a target that he rapidly wants the sight operator to observe. The driver temporarily takes over the command of the sight by compressing the flexible strip in the direction he observes the target. The sight is then rotated to the sector in which the target was observed.
2. The sight operator has temporarily looked away from the display presenting the image from the sight. When the operator intends to resume his aiming operation, he has lost his orientation. By compressing the flexible strip of the direction indicating device in a known direction, the orientation is regained.

An indicating device according to the first paragraph is essentially previously known from US patent specification 5 151 677. According to the known device an analogue alignment strip is provided comprising a tube housing a contact potentiometer. The potentiometer value is dependent on where on the potentiometer tube the tube is compressed, i.e. the location of the pressure spot along the tube. The known indicating device is complex in some respects. For example there is a requirement of particular end portions. Furthermore the contact potentiometer has to be calibrated. It is also difficult to adapt the length of the potentiometer tube to different mounting locations. The flexibility of the potentiometer tube is also delimited. If the potentiometer tube is bent past a rather narrow critical limit, non-intentional contact spots will arise within the tube.

The object of the invention is to obtain an indicating device mitigating the drawbacks of the known indicating device described above and to obtain a less complex device which is easily adapted to the space where it is to be mounted and which is reliable in operation.

The object is obtained by a device according to the first paragraph characterized in that the switch arrangement along the strip comprises a plurality of flexible membrane switches connected to the decoding electronics through a plurality of conductors provided along the stip for individual decoding of the binary status of each of the membrane switches. The introduction of membrane switches renders the flexible strip with switches very flexible. Furthermore advantage is made of a reliable digitalized decoding procedure. The device is also resistant to dirt, scratches, high temperatures and low temperatures. The device can be mounted on any kind of vehicle but it is also possible to mount the device on a stationary construction.

It is to be observed that use of electrical control keys or switches distributed along the hatch circumference of a combat vehicle per se is known from the above cited US patent. However, there is no indication to arrange theses keys in a common strip and there is nothing said about the flexibility of the arrangement. According to said patent the key solution for a plurality of switches is dispatched as being connected with a disproportionate expenditure with regard to installation, the wiring and the control.

According to a favourable embodiment the membrane switches and conductors are integrated in the flexible strip. In such a way a compact and resistant indication device is obtained. Preferably the flexible strip comprises a polyester film covering the switches and conductors.

According to another favourable embodiment the flexible strip is provided with a self-adhesive surface. Such a surface renders it easy to mount the flexible strip of the indicating device in intended spaces such as at the rim portion of an observation hatch of the vehicle.

In one preferred embodiment the decoding electronics is located in connection to the flexible strip. Any available space in connection to the strip could be used. As an alternative the decoding electronics is located distant from the flexible strip. Such an alternative could be preferred when the space close to the flexible strip is restricted and/or the decoding electronics runs the risk of being hit of movements of the operator.

According to another aspect of the device according to the invention each switch is connected to two conductors of the plurality of conductors included in a switch unique combination. Connecting the conductors to the switches in such a way results in an unambiguous connection of the switches to the decoding electronics. The status of each included switch is easily determined.

In an advantageous embodiment of the device the shape of the flexible strip is adaptable to the space where it is to be mounted. For example the flexible strip could be annularly arranged around the post of an operator at the vehicle and in particular the flexible strip could be arranged at the rim portion of an observation hatch of the vehicle. The flexible strip could be shaped as substantially a circle or a sector of a circle. Alternatively, the flexible strip could be shaped substantially as a quadrangle.

According to a still further favourable embodiment of the invention the flexible membrane switches are arranged at a plurality of different mutual distances. Such an embodiment ensures great freedom in adapting the device to an available space.

The invention will now be described in more detail with reference to the accompanying drawings in which:
Figure 1 is a perspective view of a device for indicating the direction according to the invention.
Figure 2 is a schematic sectional side view of the turret of a combat vehicle comprising a device for indicating the direction according to the invention.
Figure 3 illustrates a first example according to the invention showing how the different switches included in the device for indicating the direction could be connected.
Figure 4 illustrates a second example according to the invention showing how the different switches included in the device for indicating the direction could be connected.

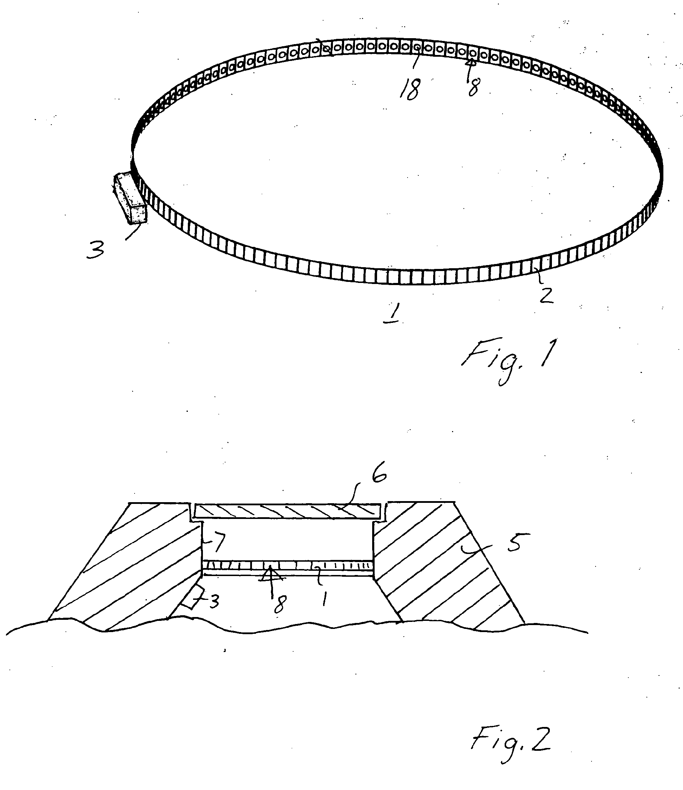

According to figure 1 the device for indicating the direction comprises a flexible strip 1 provided with membrane switches 2. Each switch 2 is provided with a depressible button 18. The flexible strip 1 is shown as having an essentially circular shape. Decoding electronics 3 in the shape of an apparatus box is located in connection to the flexible strip 1. The decoding electronics is connected to the different switches by means of conductors, not shown in figure 1 but exemplified in figures 3-4. The number of switches comprised in the device may vary within a large range. As an example a suitable number could be about one hundred. A polyester film suitably covers the switches 2 and conductors. The decoding electronics has been shown located in connection to the flexible strip 1. It is also possible to locate the decoding electronics distant from the flexible strip and arrange for a transmission between the decoding electronics and the strip by conducting wires or wireless transmission.

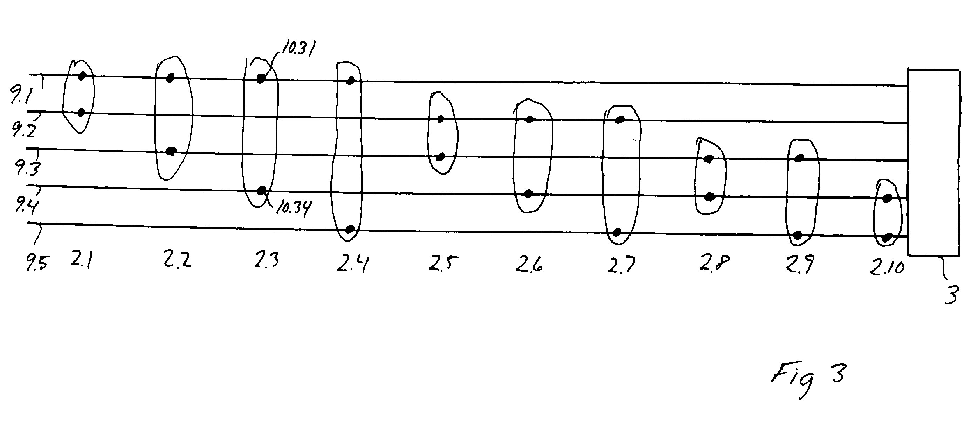

Figure 2 schematically shows a turret 5 of a combat vehicle in a sectioned side view. At the top of the turret 5 there is a hatch 6. At the rim portion 7 of the hatch 6 there is provided a flexible strip 1 with switches and conductors. The flexible strip is fixed to the rim in one or another suitable way and one proposed way is to apply the flexible strip to the rim taking advantage of a self-adhesive surface provided on the flexible strip. In figure 1 and 2 an arrow 8 indicates the decompression of one single membrane switch.

In figure 3 it is illustrated how ten different switches 2.1-2.10 could be connected to five different conductors 9.1-9.5. Dark filled dots within a switch indicate that the switch operation is conducted between these dots. When a switch is depressed a short circuit is caused between the dark dots within the switch. When for example the switch 2.3 is depressed a short circuit is caused between the dark dots 10.31 and 10.34. A decoding electronics 3 connected to the wires 9.1-9.5 identifies the switch depressed and controls equipments to be rotated into position based upon identified compressions of the switches in the flexible strip.

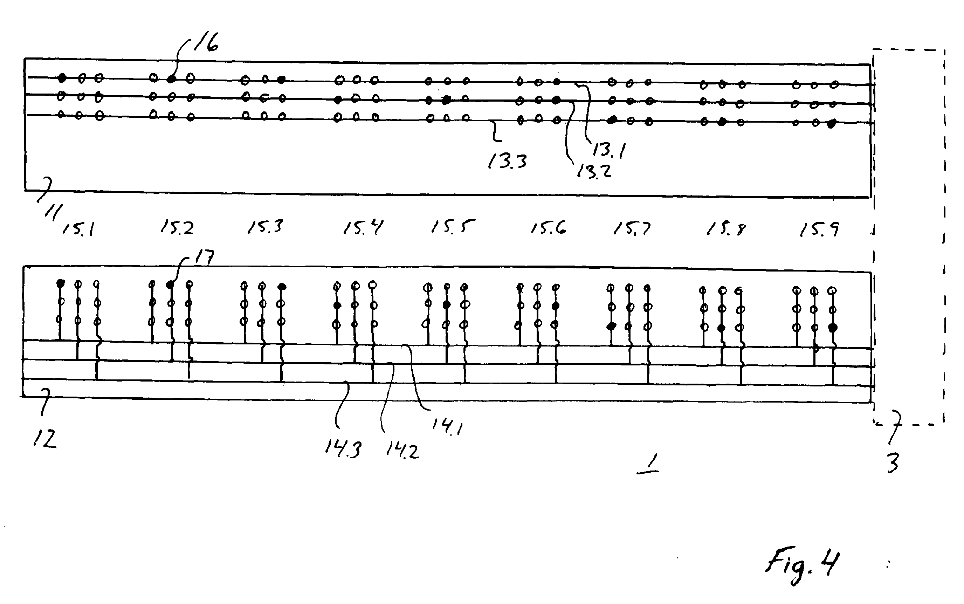

Figure 4 shows a second example of a flexible strip with switches and conductors. The strip consists of two sections 11, 12 to be arranged above each other. The strip section 11 is provided with three conductors 13.1- 13.3 and the strip section 12 is provided with three conductors 14.1-14.3. The strip shown houses nine switches 15.1-15.9. A switch operation is obtained when a dark dot from one strip section is arranged above a dark dot from the other strip section. For example a short circuit is caused between conductor 13.1 and 14.2 when the switch 15.2 is depressed creating a conducting connection between the dots 16 and 17. A decoding electronics 3 connected to the conductors 13.1-13.3 and 14.1-14.3 identifies the compressions of the switches.

The above described examples are rather straight forward and simple arrangements of switches and conductors. Of course it is possible to enhance the operation of each switch by introducing more sophisticated contact making in each switch. It is also possible to give each switch an individual identification code.

The device for indicating the direction according to the invention is not limited to the embodiments described above, but can be modified within the framework of the following claims and concept of the invention.

## Claims

1. A device for indicating the direction for rapid orientation of equipments, such as sights, periscopes and weapon barrels, comprising a flexible strip connected to decoding electronics and provided with a position dependent switch arrangement along the flexible strip, the decoding electronics communicating with the switch arrangement to identify the status of the switch arrangement, **characterized in that** the switch arrangement along the strip comprises a plurality of flexible membrane switches connected to the decoding electronics through a plurality of conductors provided along the strip for individual decoding of the binary status of each of the membrane switches.

2. A device as claimed in claim 1, **characterized in that** the membrane switches and conductors are integrated in the flexible strip.

3. A device as claimed in any of the preceding claims, **characterized in that** the flexible strip comprises a polyester film covering the switches and conductors.

4. A device as claimed in any of the preceding claims, **characterized in that** the flexible strip is provided with a self-adhesive surface.

5. A device as claimed in any of the preceding claims, **characterized in that** the flexible membrane switches are arranged at a plurality of different mutual distances.

6. A device as claimed in any of the preceding claims, **characterized in that** each switch is connected to two conductors of the plurality of conductors included in a switch unique combination.

7. A device as claimed in any of the preceding claims, **characterized in that** the shape of the flexible strip is adaptable to the space where it is to be mounted.

8. A device as claimed in claim 7, **characterized in that** the flexible strip is annularly arranged around the post of an operator at the vehicle.

9. A device as claimed in claim 7 or 8, **characterized in that** the flexible strip is arranged at the rim portion of an observation hatch of the vehicle.

10. A device as claimed in any of the preceding claims, **characterized in that** the flexible strip is shaped substantially as a circle or a sector of a circle.

11. A device as claimed in any of the preceding claims 1-9, **characterized in that** the flexible strip is shaped substantially as a quadrangle.

12. A device as claimed in any of the preceding claims, **characterized in that** the decoding electronics is located in connection to the flexible strip.

13. A device as claimed in any of the preceding claims 1-11, **characterized in that** the decoding electronics is located distant from the flexible strip.
